# EUROPEAN PATENT APPLICATION

(11) **EP 2 474 783 A1**
(43) Date of publication of application: **11.07.2012**
(21) Application number: 09848925.5
(22) Date of filing: 03.09.2009
(51) Int. Cl.: F23G 5/02, F23G 5/033, F23G 5/04, F23G 5/24

(54) **WASTE TREATMENT METHOD**

(71) Applicant: Nippon Steel Engineering Co., Ltd., Shinagawa-ku Tokyo 141-8604 (JP)
(72) Inventor: TANIGAKI, Nobuhiro, Kitakyushu-shi Fukuoka 804-8505 (JP); KASHIWABARA, Tomo, Kitakyushu-shi Fukuoka 804-8505 (JP); KURITA, Masaya, Kitakyushu-shi Fukuoka 804-8505 (JP); KOBAYASHI, Atsushi, Kitakyushu-shi Fukuoka 804-8505 (JP)
(74) Representative: Rambelli, Paolo
(86) International application number: PCT/JP2009/004347
(87) International publication number: WO 2011/027394

(57) **Abstract**

It is to reduce the amount of coke usage in a melting furnace by melting a waste efficiently. At least one of a selecting process (S1), a crushing process (S2), and a drying process (S3) is performed on a waste before the waste is fed into a melting furnace (1) in which a waste is melted using coke. At least one of the processes can select a waste having a moisture content of 50% by weight or lower, and the selected waste can be fed into the melting furnace.

## Description

### TECHNICAL FIELD

The present invention relates to a waste disposal method of performing specific processing on a waste fed into a melting furnace in which a waste is melted with a carbonaceous combustible material in massive form such as coke.

### BACKGROUND ART

Techniques to reduce the amount of coke usage have been suggested for a waste melting furnace in which a waste is melted with a carbonaceous combustible material in massive form such as coke.

The technique disclosed in Patent Literature 1 uses combustible dusts in place of coke to reduce the amount of coke usage. This technique also supplies a combustible material such as solid fuel and biomass together with combustible dusts into a melting furnace through a tuyere. This ensures an amount burned in front of the tuyere even if the amount of combustible dusts is varied, so that the amount of coke usage is reduced.

The technique disclosed in Patent Literature 2 supplies oxygen and combustible dusts through a tuyere into a melting furnace to reduce the amount of coke usage. This technique also changes a condition for air blow at the tuyere in response to the amount of combustible dusts fed in such that a ratio (B/A) between the amount of oxygen (A) supplied through the tuyere and the ideal amount of oxygen (B) falls within a range of from 0.5 to 1.0. As a result, the amount of coke usage is reduced. The ideal amount of oxygen (B) is an amount of oxygen determined by the amount and composition of combustible dusts supplied into the tuyere, and by the amount and composition of coke.

The technique disclosed in Patent Literature 3 uses biomass carbide in place of coke. This reduces the amount of coke usage and the amount of carbon dioxide to be generated by fossil fuel.

### CITATION LIST

### PATENT LITERATURE

Patent Literature 1: Japanese Patent Application Laid-Open No. 2006-207911
Patent Literature 2: Japanese Patent Application Laid-Open No. 2003-056820
Patent Literature 3: Japanese Patent Application Laid-Open No. 2007-093069

### SUMMARY OF INVENTION

### PROBLEMS TO BE SOLVED BY THE INVENTION

The present invention is a technique that focuses on a waste to be fed into a melting furnace, and is intended to reduce the amount of coke usage from a point of view different from the techniques disclosed in Patent Literatures 1 to 3.

### MEANS FOR SOLVING THE PROBLEMS

A first invention of the present application is a waste disposal method characterized by subjecting a waste to one of a selecting process, a crushing process, and a drying process before the waste is fed into a melting furnace in which the waste is melted using coke. At least one of the processes can select a waste having a moisture content of 50% by weight or lower in terms of type composition of the waste, and the selected waste can be fed into the melting furnace. The moisture amount of the waste as a whole can be from 5 to 40% by weight.

The selecting process can sieve a crushed waste obtained by the crushing and drying processes, and feed an oversized crushed waste obtained by the sieving into the melting furnace. The drying process especially makes it easy to select a waste having a moisture content of 50% by weight or lower in terms of type composition of the waste. An undersized crushed waste obtained by the sieving can be subjected to biological treatment to generate a combustible gas. Further, the oversized crushed waste can be subjected to the drying process using heat energy generated by combustion of at least part of the combustible gas, and the crushed waste after having being subjected to the drying process can be fed into the melting furnace.

The selecting process on the crushed waste obtained by the crushing process makes it possible to select a crushed waste having a particle diameter of from 5 to 300 mm, and the selected crushed waste can be fed into the melting furnace.

A second invention of the present application is a waste disposal system characterized by having a melting furnace in which a waste is melted using coke, and a processing device configured to perform at least one of a selecting process, a crushing process, and a drying process on a waste before the waste is fed into the melting furnace.

The processing device can select a waste having a moisture content of 50% by weight or lower in terms of type composition of the waste, and the selected waste can be fed into the melting furnace. The processing device can also select a waste to be fed in the total moisture content of which is from 5 to 40% by weight.

The processing device can perform the crushing and drying processes on the waste before the waste is fed into the melting furnace, and perform the selecting process to sieve a crushed waste obtained by the crushing process, thereby selecting an oversized crushed waste. Drying and crushing make it possible to easily select a waste having a moisture content of 50% by weight or lower in terms of type composition of the waste.

The oversi zed crushed waste can be fed into the melting furnace. The processing device can also perform the drying process on the oversized crushed waste using heat energy generated by combustion of at least part of a combustible gas obtained by subjecting an undersized crushed waste to biological treatment.

The processing device can perform the selecting process on the crushed waste obtained by the crushing process to select a crushed waste having a particle diameter of from 5 to 300 mm. The selected crushed waste can be fed into the melting furnace.

A plurality of tuyeres, through which an oxygen-containing gas is supplied into the melting furnace, can be provided at a plurality of positions in a vertical direction of the melting furnace. The oxygen-containing gas to be supplied through the lowest one of the plurality of tuyeres may have an oxygen concentration of from 21 to 50% by volume.

### ADVANTAGEOUS EFFECTS OF INVENTION

According to the present invention, at least one of the selecting, crushing, and drying processes is performed on a waste before the waste is fed into the melting furnace. This allows efficient melting processing of a waste in the melting furnace with a carbonaceous combustible material in massive form such as coke, thereby reducing the amount of coke usage. Disposal of a waste with a carbonaceous combustible material in massive form such as coke includes drying, thermal decomposition, combustion, and melting of the waste.

### BRIEF DESCRIPTION OF DRAWINGS

Fig. 1 a schematic diagram showing the configuration of waste melting facilities in a first embodiment of the present invention.
Fig. 2 is a schematic diagram showing the preprocessing of a waste performed in the first embodiment.

### MODES FOR CARRYING OUT THE INVENTION

An embodiment of the present invention will next be described.

### [First Embodiment]

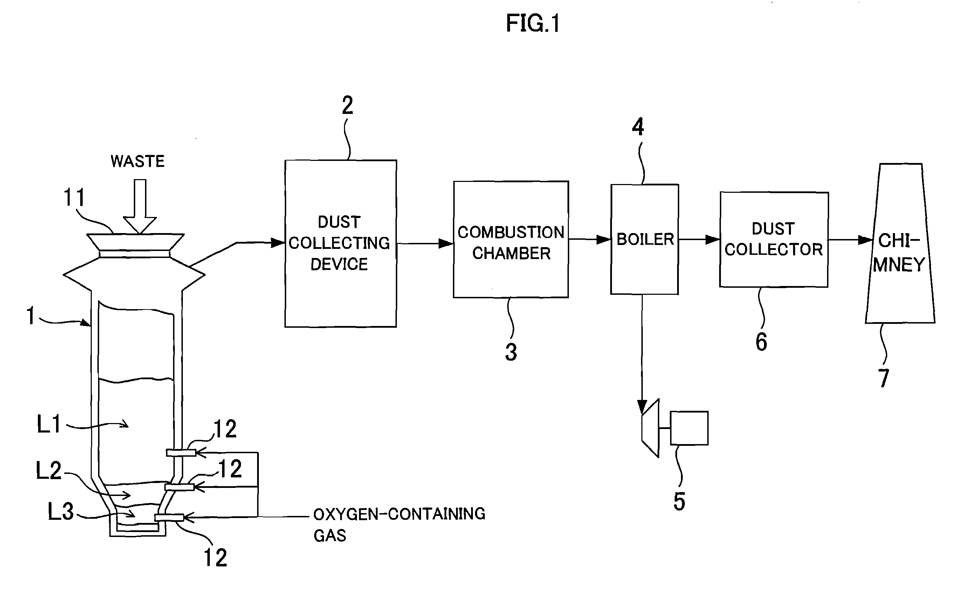

Waste melting facilities in a first embodiment of the present invention will be described by using Fig. 1.

A waste melting furnace 1 (hereinafter simply called melting furnace) is provided with a feeding hole 11 at the top through which a waste is fed together with coke and limestone as subsidiarymaterials . A waste in the melting furnace 1 is subjected to a drying process, a thermal decomposition process, a combustion process, and a melting process. A waste-filled layer L1, a dry-distilled residue layer L2, and a coke-filled layer L3 are present in the melting furnace 1.

The waste-filled layer L1 is a layer filled with a waste. The waste in the waste-filled layer L1 is subjected to the drying process and the thermal decomposition process. A gas is generated as a result of thermal decomposition of the waste. As dry-distillation of the waste proceeds, the dry-distilled waste forms the dry-distilled residue layer L2.

The coke-filled layer L3 is a layer filled with coke. When a dry-distilled residue is subjected to the melting process, slag and metal are generated. The generated slag and metal are let out of the melting furnace 1 through the bottom part of the furnace.

A waste is subjected to the drying process and other processes continuously in the melting furnace 1, and accordingly, the boundaries among the layers L1 to L3 are not determined uniquely. The boundaries of Fig. 1 are intended to easily show the positional relationship among the layers L1 to L3.

The melting furnace 1 is provided with a plurality of tuyeres 12 through which an oxygen-containing gas is supplied into the melting furnace 1. Air in the atmosphere, or oxygen-enriched air may be used as the oxygen-containing gas. The oxygen-enriched air is air containing oxygen the ratio of which is larger than that of oxygen (generally21%) contained in the air in the atmosphere. Theplurality of tuyeres 12 are provided at different positions in the vertical direction of the melting furnace 1.

The number of tuyeres 12, and the positions of the tuyeres 12 may be arbitrarily determined. In some cases, only one tuyere 12 may be provided.

According to the present invention, supply of the oxygen-containing gas through the plurality of tuyeres 12 into the melting furnace 1 can promote the combustion reaction in the melting furnace 1. Further, heat energy generated as a result of the combustion can be utilized as a heat source for performing the drying process and the thermal decomposition process of a waste.

The oxygen-containing gas to be supplied through the lowest one of the plurality of tuyeres 12 has an oxygen concentration that is preferably from 21 to 50% by volume. More specifically, the oxygen-containing gas to be supplied through the lowest tuyere 12 may be prepared by mixing oxygen with air such that the gas has an oxygen concentration of from 21 to 50% by volume. This setting of an oxygen concentration keeps a temperature in the melting furnace 1 at a degree at which adequate combustion of coke is allowed. The adequate combustion of coke mentioned here means combustion that does not cause excessive combustion or excessive consumption of coke.

Here, if the oxygen-containing gas has an oxygen concentration lower than 21% by volume, a temperature in the melting furnace I (in particular, a temperature at the bottom part of the furnace filled with coke) may be lowered excessively. In this case, coke must be used in order to increase the temperature in the melting furnace I, resulting in an increased amount of coke usage. Meanwhile, if the oxygen-containing gas has an oxygen concentration higher than 50% by volume, the temperature in the melting furnace l (in particular, the temperature at the bottom part of the furnace filled with coke) maybe increasedexcessively. In this case, solution-loss reaction (C + CO₂ → 2CO) proceeds excessively, resulting in an unduly increased amount of coke consumed.

The gas generated in the melting furnace I is let out of the melting furnace I through the top thereof, and is then supplied to a dust collecting device 2. The dust collecting device 2 collects combustible dusts contained in the gas. The gas passing through the dust collecting device 2 is burned completely in a combustion chamber 3, and is thereafter supplied as a combustion exhaust gas to a boiler 4. The boiler 4 exchanges heat with the combustion exhaust gas to generate steam, and the generated steam is supplied to a steam turbine 5. The steam turbine 5 can generate power by using the supplied steam. It should be noted that the dust collecting device 2 may be omitted in some cases.

The combustion exhaust gas from which heat is recovered in the boiler 4 is supplied to a dust collector 6. The dust collector 6 removes dusts and others from the combustion exhaust gas with a filter. The combustion exhaust gas filtered in the dust collector 6 is let out to the atmosphere through a chimney 7.

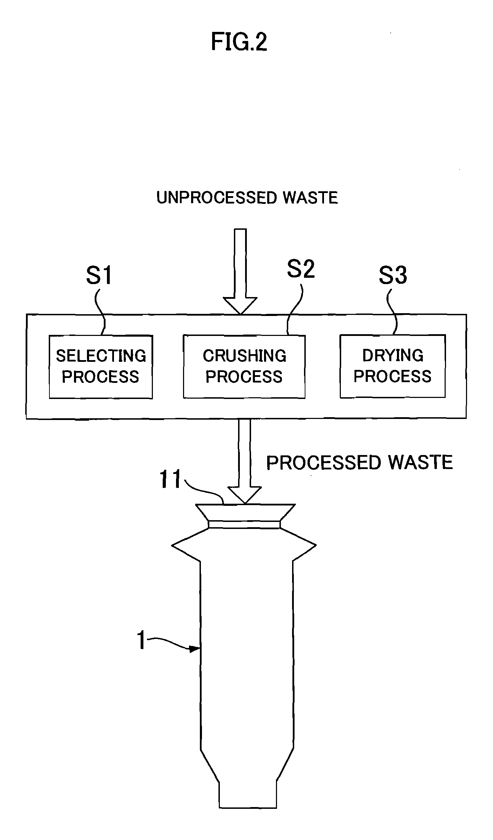

A waste to be fed into the melting furnace 1 will be next described by referring to Fig. 2. In the present embodiment, before a waste is directly fed into the melting furnace 1, the waste is subjected to a predetermined preprocessing.

The preprocessing of a waste includes a selecting process S1, a crushing process S2, and a drying process S3. A waste before being preprocessed is called an "unprocessed waste," and a waste after having being preprocessed is called a "processed waste."

The selecting process S1 will be first described. The selecting process S1 selects an unprocessed waste having a moisture content of 50% by weight or lower. While it is preferred that the processed waste processed by the selecting process S1 preferably does not include a waste having a moisture content higher than 50% by weight, it may include such a waste. To be specific, what is required for the selecting process S1 is to remove at least part of the waste having a moisture content higher than 50% by weight from the unprocessed waste. Examples of the waste having a moisture content higher than 50% by weight include garbage (having a moisture content of from 70 to 80% by weight).

The selecting process S1 may be performed manually by a worker, or mechanically. Examples of the selecting process S1 performed manually include waste separation at home and at other places. Examples of the selecting process S1 performed mechanically include sieving. The sieving is performed by a machine such as a trommel and a vibratory sieving machine.

In the sieving, an unprocessed waste is separated by using the aforementioned machine, and resultant oversized waste is fed into the melting furnace 1. The unprocessed waste may be crushed or dried before being sieved. The unprocessed waste can be separated efficiently if it has been subj ected to the crushing or drying process. A sieving mesh may be arbitrarily defined from the aforementioned viewpoint of removal of a waste having a moisture content higher than 50% by weight.

In many cases, an undersized waste obtained by the sieving is higher in moisture content than the oversized waste. As an example, animal fine dusts may have a moisture content of 49.8%, whereas vegetable fine dusts may have a moisture content of 33.1%. Further, garbage having a high moisture content may be easily separated as an undersized waste if the unprocessed waste has been subjected to the crushing or drying process.

The unprocessed waste is fed into the melting furnace 1 after the undersized waste, namely the waste having a higher moisture content is removed from the unprocessed waste. This can cause the temperature in the melting furnace 1 to be difficult to be lowered. This means that heat energy used for evaporation of the moisture contained in the waste (for drying) can be reduced, thereby suppressing the temperature reduction in the melting furnace 1.

In many cases, regarding a waste having a moisture content of 50% by weight or lower, moisture is not contained in the waste, but is attached on a surface of the waste. The moisture of the waste can be evaporated easily if it is attached on a surface of the waste. This reduces the amount of coke to be used for increasing the temperature in the melting furnace 1, thereby reducing the amount of coke usage.

Here, if a waste to be fed into the melting furnace 1 has a lower moisture content, a waste in the melting furnace 1 can be dried and dry-distilled more efficiently.

Meanwhile, a waste having a moisture content higher than 50% by weight can generate a combustible gas if it is subjected to biological treatment. Examples of the biological treatment include fermentation such as methane fermentation and ethanol fermentation. The combustible gas generated by the biological treatment can be used in the melting furnace 1.

More specifically, in the configuration where combustible dusts collected by the dust collecting device 2 shown in Fig. 1 are supplied through a tuyere (not shown) attached to the melting furnace 1 into the melting furnace 1, a combustible gas (at least part thereof) obtained by biological treatment can be supplied together with the combustible dusts into the melting furnace 1. This can enhance the combustion efficiency of the combustible dusts. The enhanced combustion efficiency of the combustible dusts allows the combustible dusts to be used in place of coke, thereby reducing the amount of coke usage in the melting furnace 1.

In the configuration where combustible dusts and an oxygen-containing gas are supplied into the melting furnace 1, the oxygen-containing gas can be preheated by using heat energy generated by combustion of combustible gas (at least part of the combustible gas) obtained by biological treatment. This allows efficient use of the heat energy to increase the temperature of the combustible dusts before the combustible dusts reach the melting furnace 1. The increased temperature of the combustible dusts allows the temperature of the combustible dusts in the melting furnace 1 to reach an ignition temperature in a shorter time, thereby improving the combustion characteristics of the combustible dusts. Asa result, the amount of combustible dusts to be used in place of coke can be increased while the amount of coke usage can be reduced.

In the configuration where biomass carbide is fed into the melting furnace 1 together with a waste, the biomass carbide can be generated by using heat energy generated by combustion of combustible gas (at least part of the combustible gas) obtained bybiologicaltreatment. This allows efficient use of the heat energy to generate the biomass carbide.

Biomass mentioned here means all living things, namely organisms that can be recycled as energy recourses. Examples thereof include wood, pulp spent liquor, paper, and oil. Use of biomass carbide can reduce the amount of carbon dioxide. Sewage sludge, waste wood, food waste and others are used effectively as biomass for recycling of a waste.

The crushing process S2 will be next described.

The crushing process S2 crushes at least part of an unprocessed waste with a crusher. The crusher may be a known machine that is arbitrarily selected according to the type of an unprocessed waste.

If a processed waste (crushed waste) crushed by the crushing process S2 is fed into the melting furnace 1, heat exchange between a high-temperature gas and the crushed waste in the melting furnace 1 can be improved in efficiency, when compared with the case where a waste not having been subjected to the crushing process S2 is fed into the melting furnace 1. This means that the crushed waste can be dried and dry-distilled more efficiently by using heat generated in the melting furnace 1. Reduction in heat energy occurring in drying process and the like of a waste is suppressed, thereby reducing the amount of coke usage in the melting furnace 1. Crushing makes it possible to easily select the waste having a moisture content of 50% by weight or lower.

A particle diameter of the crushed waste is preferably from 5 to 300 [mm]. Here, the crushed waste having a diameter of from 5 to 300 [mm] can be obtained by sieving the crushed waste obtained by the crushing process S2 at least once.

If the particle diameter of the crushed waste is smaller than 5 [mm], the density of the waste-filled layer L1 (see Fig. 1) in the melting furnace 1 increases, leading to lower air permeability of the waste-filled layer L1. This makes it difficult to supply the oxygen-containing gas into the melting furnace 1, or results in the need to enhance the capacity of a machine (such as a blower) responsible for supply of the oxygen-containing gas. This may also generate fluidization in the waste-filled layer L1 in the melting furnace 1, resulting in a fear of dispersion of combustible dusts supplied into the melting furnace 1 in place of coke. In this case, it is difficult to reduce the amount of coke usage.

If the particle diameter of the crushed waste is larger than 300 [mm], insufficient heat exchange between the waste (crushed waste) and the high-temperature gas in the waste-filled layer L1 may be likely to take place. Insufficient heat exchange may make the waste reach the coke-filled layer disposed at the bottom part of the melting furnace 1 before the waste is dried and dry-distilled. In this case, extra coke is needed to dry and dry-distill the waste, resulting in an increased amount of coke usage.

In order to process the waste (crushed waste) efficiently in the melting furnace 1, the particle diameter of the crushed waste is more preferably set to from 30 to 200 [mm]. [0053]
The drying process S3 will be described next.

The drying process S3 dries at least part of the unprocessed waste. The drying process S3 may positively dry the waste with a dryer, or may let the waste dry naturally. Use of a dryer can improve the process efficiency of the waste in the melting furnace 1. Meanwhile, natural drying can reduce energy required for the drying. Further, drying or crushing makes it possible to easily select the waste having a moisture content of 50% by weight or lower. The dryer may be a known machine that is arbitrarily selected according to the type of an unprocessed waste.

What is required for the drying process S3 is tomake the moisture content of a processed waste lower than that of an unprocessed waste. More preferably, the moisture content of the processed waste fall within a range of from 5 to 40% by weight.

If the moisture content of a processed waste is made lower than that of an unprocessed waste, heat energy required for the drying process and the like of the processed waste in the melting furnace 1 can be reduced, thereby suppressing increase of the amount of coke usage.

The drying process S3 should be continued for a long time in order to obtain a waste having a moisture content of 5% by weight or lower. This is not preferable if the efficiency of the waste processing in the system is to be enhanced as a whole. Meanwhile, the moisture content of a waste higher than 40% by weight increases heat energy required for the drying process and the like of the waste in the melting furnace 1, making it difficult to reduce the amount of coke usage.

The drying process S3 can use heat generated by combustion of a combustible gas (at least part of the combustible gas) generated by biological treatment. As an example, the selecting process S1 or the crushing process S2 can remove the waste having a moisture content higher than 50% by weight, and the removed waste may be subjected to biological treatment. As described, use of combustible gas generated by biological treatment eliminates the need to use fuel dedicated to generation of heat energy required by the drying process S3.

An unprocessed waste may be subj ected to any one of the selecting process S1, the crushing process S2, and the drying process S3 described above. If a plurality of processes are performed in combination, a waste in the melting furnace 1 can be processed efficiently by an additive effect achieved by the respective processes, thereby reducing the amount of coke usage. If a plurality of processes are performed, an order in which the processes are performed may be arbitrarily determined.

If a waste to be fed into the melting furnace 1 has a high thermal decomposition rate, or has a moisture content of 50% by weight or lower, a drying speed for a waste in the melting furnace 1 can be increased, or temperature reduction in the melting furnace 1 can be suppressed. This can reduce the amount of coke usage. Examples of the waste to be fed in include paper, plastic, fiber such as grass, wood and bamboo, metal, glass, ceramics, rubber, leather, and shredder dusts. These wastes can be selected by the aforementioned selecting process S1, the crushing process S2, and the drying process S3.

### DESCRPITION OF REFERENCE NUMERALS

- 1:: melting furnace
- 11:: feeding hole
- 12:: tuyere
- 2:: dust collecting device
- 3:: combustion chamber
- 4:: boiler
- 5:: steam turbine
- 6:: dust collector
- 7:: chimney
- S1:: selecting process
- S2:: crushing process
- S3:: drying process

## Claims

1. A waste disposal method comprising subjecting a waste to at least one of a selecting process, a crushing process, and a drying process before the waste is fed into a melting furnace in which the waste is melted using coke.

2. The waste disposal method according to claim 1, further comprising,
selecting a waste having a moisture content of 50% by weight or lower in terms of type composition of the waste by performing at least one of the processes, and
feeding the selected waste into the melting furnace.

3. The waste disposal method according to claim 2, further comprising,
setting the moisture content of the waste as a whole from 5 to 40% by weight by performing at least one of the processes, and
feeding the waste into the melting furnace.

4. The waste disposal method according to any one of claims 1 to 3, further comprising,
subjecting the waste to the crushing process before the waste is fed into the melting furnace;
sieving a crushed waste obtained by the crushing process in the selecting process; and
feeding an oversized crushed waste obtained by the sieving into the melting furnace.

5. The waste disposal method according to claim 4, further comprising,
subjecting an undersized crushed waste obtained by the sieving to biological treatment to generate a combustible gas;
subjecting the oversized crushed waste to the drying process using heat energy generated by combustion of at least part of the combustible gas; and
feeding the crushed waste after having being subjected to the drying process into the melting furnace.

6. The waste disposal method according to any one of claims 1 to 5, further comprising,
subjecting the crushed waste obtained by the crushing process to the selecting process to select a crushed waste having a particle diameter of from 5 to 300 mm, and
feeding the selected crushed waste into the melting furnace.

7. A waste disposal system comprising:
a melting furnace in which a waste is melted using coke, and
a processing device configured to perform at least one of a selecting process, a crushing process, and a drying process on a waste before the waste is fed into the melting furnace.

8. The waste disposal system according to claim 7, wherein the processing device selects a waste having a moisture content of 50% by weight or lower in terms of type composition of the waste, and feeds the selected waste into the melting furnace.

9. The waste disposal system according to claim 8 or 9, wherein the processing device prepares a waste to be fed in so as to have a total moisture content of from 5 to 40% by weight.

10. The waste disposal system according to any one of claims 7 to 9, wherein the processing device
performs the crushing process on the waste before the waste is fed into the melting furnace, and
performs the selecting process to sieve a crushed waste obtained by the crushing process, thereby selecting an oversized crushed waste to be fed into the melting furnace.

11. The waste disposal system according to claim 10, wherein the processing device performs the drying process on the oversized crushed waste using heat energy generated by combustion of at least part of a combustible gas obtained by subjecting an undersized crushed waste to biological treatment.

12. The waste disposal system according to any one of claims 7 to 11, wherein the processing device performs the selecting process on the crushed waste obtained by the crushing process to select a crushed waste having a particle diameter of from 5 to 300 mm, the selected crushed waste being to be fed into the melting furnace.

13. The waste disposal system according to any one of claims 7 to 12, wherein the melting furnace has a plurality of tuyeres provided at a plurality of positions in a vertical direction of the melting furnace, the plurality of tuyeres configured to supply an oxygen-containing gas into the melting furnace.

14. The waste disposal system according to claim 13, wherein the oxygen-containing gas to be supplied through a lowest one of the plurality of tuyeres has an oxygen concentration of from 21 to 50% by volume.
